# EUROPEAN PATENT APPLICATION

(11) **EP 1 703 740 A2**
(43) Date of publication of application: **20.09.2006**
(21) Application number: 06005211.5
(22) Date of filing: 14.03.2006
(51) Int. Cl.: H04N 9/12, H04N 5/445

(54) **Multi-display apparatus, screen adjustment method of the same and screen adjustment program product**

(30) Priority: 14.03.2005 JP 2005070427
(71) Applicant: Pioneer Corporation, Meguro-ku, Tokyo (JP)
(72) Inventor: Hirayama, Hiroki c/o Pioneer Corporation, Ohta-ku, Tokyo (JP)
(74) Representative: Reinhard - Skuhra - Weise & Partner

(57) **Abstract**

A multi-display apparatus including: a plurality of display devices which are remotely controllable by a remote controller; an ID number storing unit which stores ID numbers for identifying the plurality of the display devices; a detailed screen adjustment information display unit which simultaneously displays a detailed screen adjustment information for designating the ID number on display screens of the display devices according to an instruction from the remote controller; a screen adjustment menu display unit which displays a screen adjustment menu on the display screen of the display device, which corresponds to the designated ID number, by a key operation of the remote controller; and a screen adjustment unit being capable of adjusting the display screen of the display device on a basis of the screen adjustment menu.

## Description

The present disclosure relates to the subject matter contained in Japanese Patent Application No. 2005-070427 filed on March 14, 2005, which is incorporated herein by reference in its entirety.

### BACKGROUND OF THE INVENTION

### 1. Field of the Invention

The present invention relates to a multi-display apparatus, a screen adjustment method thereof and a screen adjustment program product for executing the same method.

### 2. Description of the Related Art

Amulti-display apparatus is constituted with a plurality of display devices having display screens arranged in, for example, a matrix such that a large display screen can be constructed with the display screens of the display devices. By providing such multi-display apparatus in such as a showroom for exhibiting showpieces, a professional bicycle racing stadium, a station or a multipurpose hall, an unspecified large number of people can watch contents of a display screen of the multi-display apparatus at positions remote from the display screen of the multi-display apparatus. (For example, refer to JP-A-2001-275137).

In such multi-display apparatus, when picture qualities on the display screens of the display devices are different, watchers may have uncomfortable feeling when they watch the display screen of the multi-display apparatus. Therefore, it is necessary to adjust the display screens of the respective display devices individually such that a picture quality of the large screen of the multi-display apparatus becomes substantially uniform.

The adjustment of the display screens of the respective display devices, which constitute the multi-display apparatus, is performed by selecting a specific one of the display devices by a remote controller to adjust the display screen thereof individually or performed by adjusting the display screens of the specific displays by a computer connected to the multi-display apparatus.

### SUMMARY OF THE INVENTION

In the related-art display screen adjustment method of a multi-display apparatus, in which a remote controller is used, there are problems.

That is, in order to perform a display screen adjustment of only a specific one of the display devices, the adjustment has to be performed by approaching the remote controller to the specific display device such that a remote control signal from the remote controller is not received by other display devices. Alternatively, the adjustment has to be performed by using a remote controller having high directivity and emitting a very narrow remote control signal (infrared ray).

Since it is usual that the display devices constituting the multi-display apparatus are installed in high places, which are hardly approached by an operator, there is a case where it is difficult for the operator to adjust a display screen of a display device by approaching the display device. When, in order to solve such problem, a remote controller having a sharp directivity is used, it is necessary to manufacture such remote controller dedicated to the multi-display apparatus. Therefore, there is a problem of cost for manufacturing the remote controller. Further, there is a problem of operability that a remote control signal (infrared ray) may be deviated from a receiver (infrared ray receiver) of a display device to be adjusted, by , for example, shaking of operator's hand.

The method for adjusting a picture quality on a screen of a display device by connecting a computer to the multi-display apparatus requires the computer and a software for screen adjustment. Therefore, there is a problem of cost. Further, it is necessary to connect the computer to external connecting terminals such as RS232C terminal, etc., of the display device to be adjusted every time when the screen adjustment is performed. Therefore, there is a problem of working efficiency.

Aspects of the present invention provide a low cost multi-display apparatus, which has good operability in performing a screen adjustment of each of the display devices constituting the multi-display apparatus, a display screen adjustment method thereof and a screen adjustment program product for executing the method are provided.

According to an aspect of the present invention, there is provided a multi-display apparatus including: a plurality of display devices which are remotely controllable by a remote controller; an ID number storing unit which stores ID numbers for identifying the plurality of the display devices; a detailed screen adjustment information display unit which simultaneously displays a detailed screen adjustment information for designating the ID number on display screens of the display devices according to an instruction from the remote controller; a screen adjustment menu display unit which displays a screen adjustment menu on the display screen of the display device, which corresponds to the designated ID number, by a key operation of the remote controller; and a screen adjustment unit being capable of adjusting the display screen of the display device on a basis of the screen adjustment menu.

According to another aspect of the present invention, there is provided a screen adjustment method of a multi-display apparatus for adjusting display screens of a plurality of display devices, which constitute the multi-display apparatus, by a remote controller, the method including the steps of: storing ID numbers for identifying the plurality of the display devices in an ID number storing unit; simultaneously displaying a detailed screen adjustment information on display screens of the display devices according to an instruction from the remote controller; displaying a screen adjustment menu, by key operations of an ID input key and a screen adjustment key of the remote controller, the ID input key corresponding to the ID number displayed on the detailed screen adjustment information, on the display screen of the display device designated by the key operations; and executing a screen adjustment in the displayed screen adjustment menu, which is designated by the remote controller.

According to a further aspect of the present invention, there is provided a screen adjustment program product for enabling a computer of a multi-display apparatus to execute adjustment of display screens of a plurality of display devices, which constitutes the multi-display apparatus, by a remote controller, the adjustment including the steps of: storing ID numbers for identifying the plurality of the display devices in an ID number storing unit; simultaneously displaying a detailed screen adjustment information on display screens of the display devices according to an instruction from the remote controller; displaying a screen adjustment menu, by key operations of an ID input key and a screen adjustment key of the remote controller, the ID input key corresponding to the ID number displayed on the detailed screen adjustment information, on the display screen of the display device designated by the key operations; and executing a screen adjustment in the displayed screen adjustment menu, which is designated by the remote controller.

### BRIEF DESCRIPTION OF THE DRAWINGS

Fig. 1 is a block diagram showing a multi-display apparatus according to an embodiment of the present invention;
Fig. 2 is a block diagram showing an internal construction of each of display devices shown in Fig. 1.

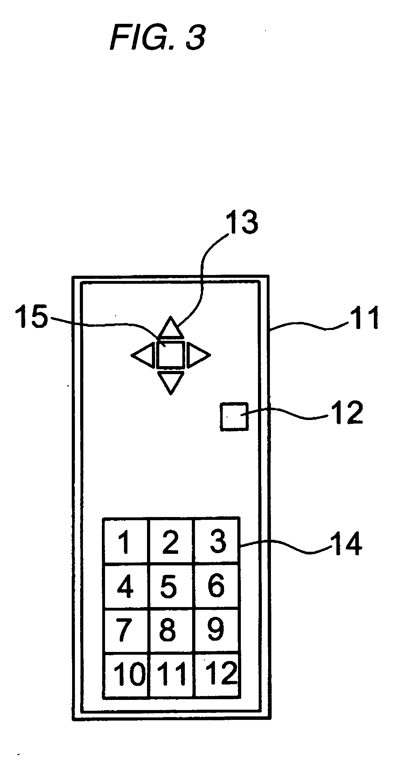

Fig. 3 is a schematic view of a remote controller shown in Fig. 1;
Fig. 4 is a flowchart showing a screen adjustment process of the multi-display apparatus according to the embodiment of the present invention;
Fig. 5 is a first portion of the screen adjustment process on the display device according to the embodiment of the present invention;
Fig. 6 is a second portion of the screen adjustment process on the display device according to the embodiment of the present invention;
Fig. 7 shows a detail of detailed screen adjustment information screen in Fig. 6;
Fig. 8 is a third portion of the screen adjustment process on the display device according to the embodiment of the present invention;
Fig. 9 shows a detail of a screen adjustment menu in Fig. 8; and
Fig. 10 is a fourth portion of the screen adjustment process on the display device according to the embodiment of the present invention.

### DETAILED DESCRIPTION OF THE PREFFERED EMBODIMENTS

Embodiments of a multi-display apparatus and a screen adjustment method according to the present invention will be described with reference to the drawings.

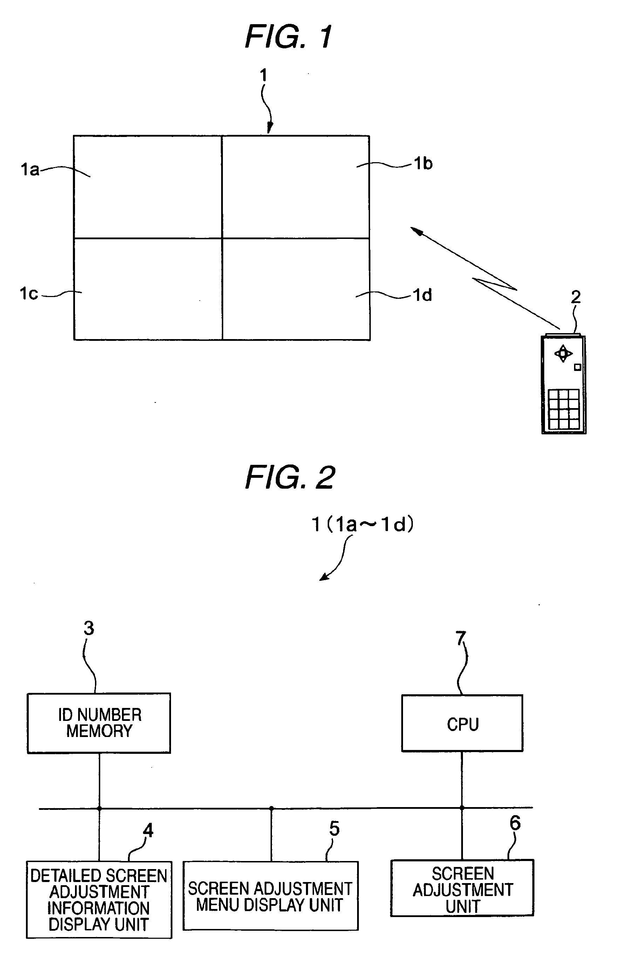

Fig. 1 illustrates a multi-display apparatus according to an embodiment of the present invention.

As shown in Fig. 1, the multi-display apparatus 1 is constituted with a plurality (four) of display devices 1a, 1b, 1c and 1d arranged in a 2×2 matrix. A screen adjustment for each of the display devices 1a to 1d can be individually performed by a remote controller 2.

Each of the display devices 1a to 1d, which constitute the multi-display apparatus 1 shown in Fig. 1, includes an ID number memory 3, a detailed screen adjustment information display unit 4 for displaying a detailed screen adjustment information, a screen adjustment menu display unit 5 for displaying a screen adjustment menu, a screen adjustment unit 6 and a CPU 7, as shown in Fig. 2.

The ID number memory 3 provided in each of the display devices 1a to 1d stores ID numbers for identifying the display devices 1a to 1d.

The detailed adjustment information display unit 4 functions to simultaneously display, based on the instruction from the remote controller 2, detailed screen adjustment information for designating the ID numbers on display screens of the respective display devices 1a to 1d.

The screen adjustment menu display unit 5 displays the screen adjustment menu on only a display screen of a display device (for example, the display device 1d), the ID number of which matches with a number inputted by operating numerical keys of the remote controller 2 by an operator.

The screen adjustment unit 6 executes a specific screen adjustment selected from the displayed screen adjustment menu on a basis of a key input from the remote controller.

The CPU 7 executes various information input/output processing and an operation processing with respect to the ID number memory 3, the detailed screen adjustment information display unit 4, the screen adjustment menu display unit 5 and the screen adjustment unit 6.

The remote controller 2 includes a display key 12, direction keys 13 being operable when adjusting the change amount of the picture quality by designating the upper, lower, left and right directions, numerical keys 14 and a set key (decision key) 15. The respective keys 12 to 15 of the remote controller 2 are used for functions, which are different from usual channel selection, etc., by an operation of a mode switching key. The keys 12 to 15 function to transmit operational instructions (command signals), which correspond to the respective keys, by infrared ray, electromagnetic wave or ultrasonic wave, correspondingly to the operations of the keys.

Incidentally, the remote controller 2 may be any one of conventional remote controllers, provided that it has the above-mentioned keys.

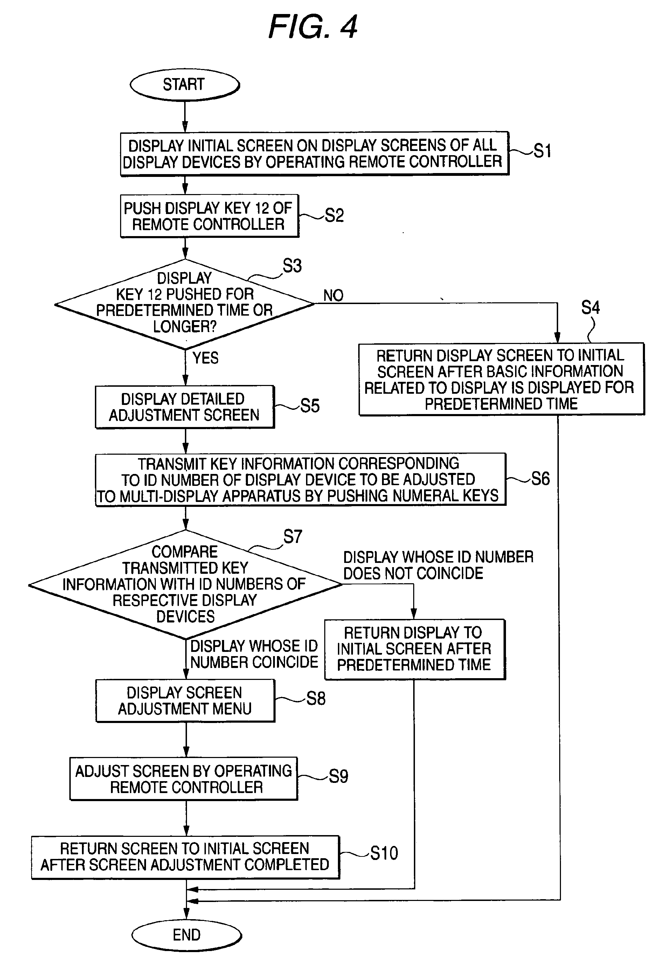

Now, an example of the screen adjustment method using the screen adjustment performed by the multi-display apparatus of the present invention will be described with reference to Fig. 4.

Fig. 4 is a flowchart showing a procedure of the screen adjustment performed by the multi-display apparatus.

In this example, it is assumed that only one of the display devices 1a to 1d is selected by an operation of the remote controller 2 and the screen adjustment of the selected display device is performed.

First, ID numbers of the display devices 1a to 1d are stored in the ID number memory 3. In this example, it is assumed that ID numbers "01" to "04" are assigned to the display devices 1a, 1b, 1c and 1d, respectively.

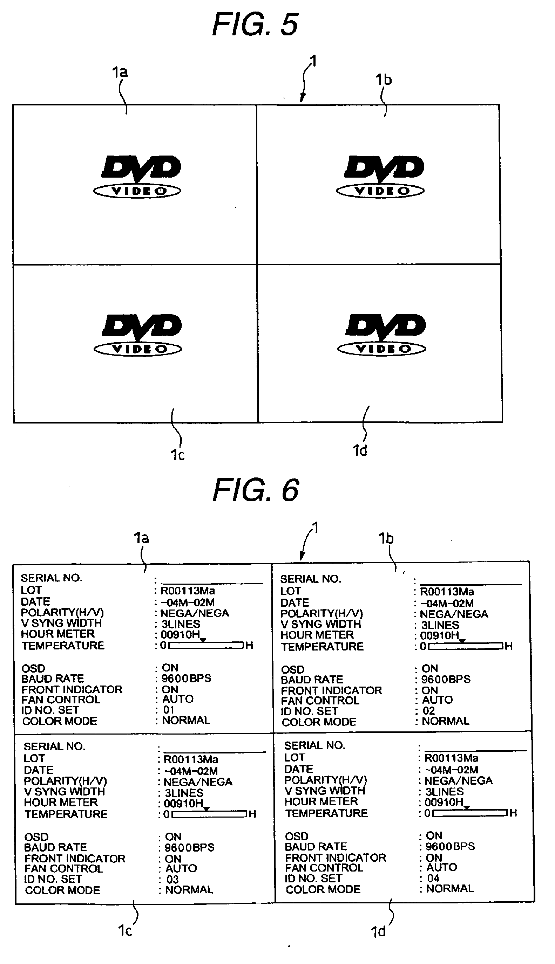

Next, all of the display devices 1a to 1d, which constitute the multi-display apparatus 1, are remotely booted up by an operation of the remote controller 2 (for example, by pushing of "power source key" of the remote controller) . By this operation, initial screen displays such as shown in Fig. 5 are displayed on the display screens of the respective display devices 1a to 1d (Step S1).

Then, an operator pushes the display key 12 of the remote controller 2 (Step S2) . By the pushing operation of the display key 12, a key information is transmitted from the remote controller 2 to the respective display devices 1a to 1d and the CPUs 7 of the display devices 1a to 1d determine whether or not the display key 12 is continuously pushed for a predetermined time (for example, 30 seconds) or longer (Step S3).

In the Step S3, when the display key 12 is not continuously pushed for the predetermined time (for example, 30 seconds) or longer (NO), the displays on the display screens of the respective display devices 1a to 1d are returned to the initial displays after a basic information related to the displays on the display screens is displayed for a predetermined time (for example, 30 seconds) (Step S4).

On the other hand, when the display key 12 is continuously pushed for the predetermined time (for example, 30 seconds) or longer (YES) in the step S3, a detailed screen adjustment information such as shown in Fig. 6 is simultaneously displayed on the display screens of all of the display devices 1a to 1d (Step S5).

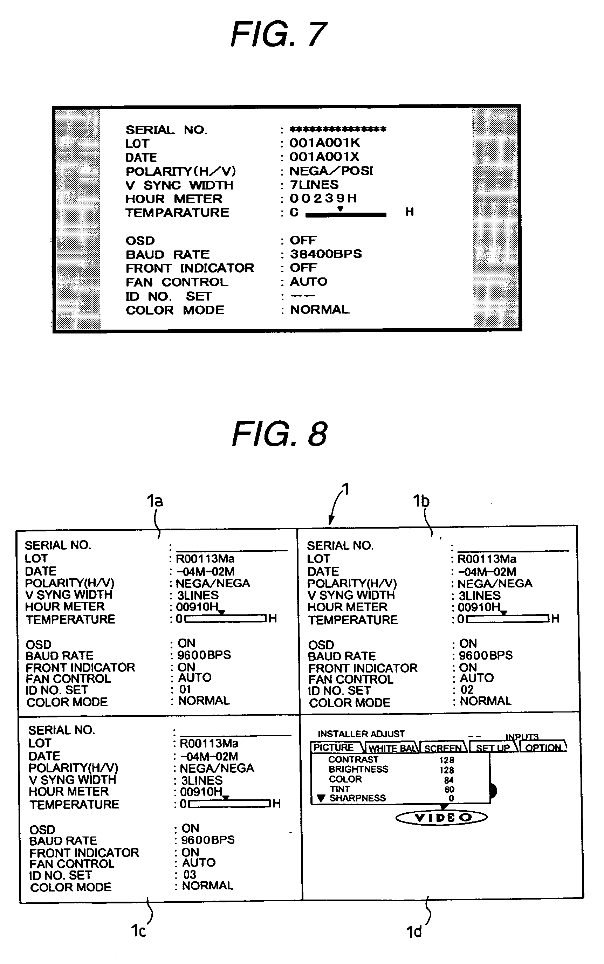

Fig. 7 shows an example of contents of the detailed adjustment information displayed on each of the display screens of the display devices 1a to 1d. In Fig. 7, an ID number for identifying a display device of the display devices 1a to 1d, to which the adjustment is to be performed, is displayed (in Fig. 7, the ID number is displayed in a location -- of a section ID NO. SET), in addition to a serial number, a lot number, an adjustment date, an environment temperature and a color mode, etc.

The selection of the display device having the screen to be adjusted will be described.

When the adjustment of the display screen of, for example, the display device 1d is to be performed, the operator looks at the display of the ID number on the detailed screen adjustment information and confirms that the ID number (a section of ID NO. SET of the display 1d in Fig. 6) of the display device 1d is "04".

After the operator confirmed that the ID number is "04", the operator pushes a "0" key of the numerical keys 14 of the remote controller and then pushes a "4" key. And then, the operator pushes the set key 15. Thus, the key information corresponding to the ID number "04" is transmitted to the multi-display apparatus 1 (Step S6).

The CPUs 7 of the display devices 1a to 1d compare the key information corresponding to the transmitted ID number "04" with their own ID numbers, respectively (Step S7). In this example, the display device 1d is selected since the key information corresponding to the ID number "04" is emitted.

On the screen of the display device (in this example, the display device 1d) whose ID number coincides with the transmitted ID number, a screen adjustment menu such as shown in Fig. 8 is displayed (Step S7). The adjustment menu includes a tab for selecting one of adjustment items and a numerical value indicating a current screen (for example, numerically expressed contrast, brightness, etc.).

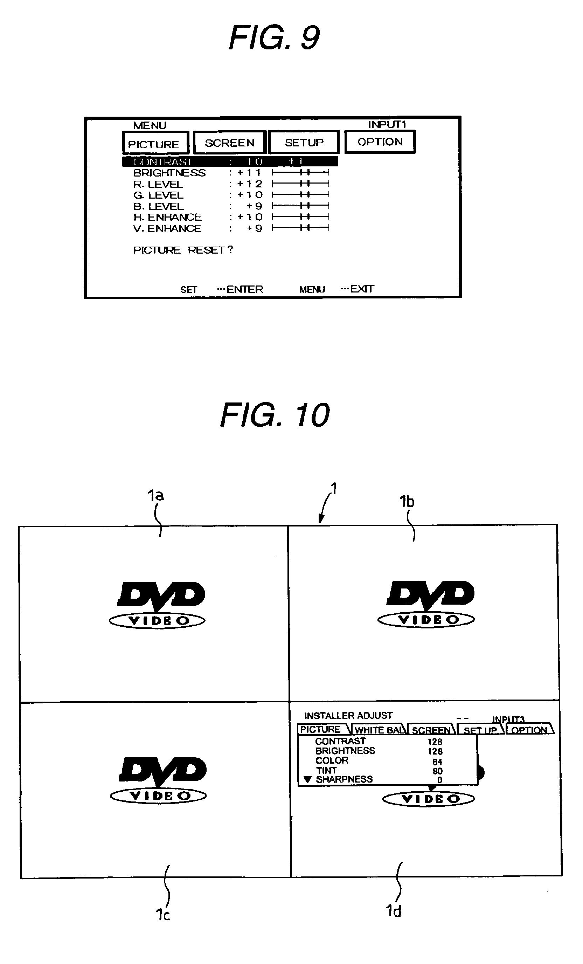

Further, by selecting the tab in the screen adjustment menu, an adjustment value setting screen (an example is shown in Fig. 9) for adjusting the selected adjustment item is displayed.

The operator can set the values of the respective adjustment items by moving the numerical bars of the respective adjustment items (CONTRAST, BRIGHTNESS, etc.) by operating the direction key 13 and the set key 15 of the remote controller 2 while looking at the adjustment value setting screen such as shown in Fig. 9. In this manner, various screen adjustments such as the screen brightness adjustment and the screen position adjustment are performed (Step S8).

On the other hand, the screens of the display devices 1a to 1c whose ID numbers do not coincide with the transmitted ID number are returned to the initial screen display such as shown in Fig. 10 after the predetermined time (for example, 30 seconds) (Step S10).

After the screen adjustment of the display device 1d is completed, a predetermined adjustment end operation is performed (for example, by pushing "power source key" or an end button (not shown) of the screen adjustment menu) (Step S11). Thus, the display screen of the display device 1d is returned to the initial display.

By performing the series of the screen adjustment operations in this manner, it is possible to obtain a balanced image quality of the whole screen of the multi-display apparatus 1.

Incidentally, in this embodiment, the CPU 7 of each of the display devices 1a to 1d, instructs its own display deice to suspend a broadcasting channel selection and a image input source selection, which are the essential functions of the numerical key 14, in the state where the detailed screen adjustment information screen is displayed, and instructs it to allow the broadcasting channel selection and the image input source selection in the usual use of the remote controller.

Therefore, in the usual use of the multi-display apparatus 1, it is possible to select the channel and the image input source by operating the numerical key 14 of the remote controller 2.

As described, since, in this embodiment, the numerical key 14 can be used for not only the channel selection and the video input source selection in the usual use but also the selection of the display in the screen adjustment, there is no need of providing a key dedicated to the selection of display device.

That is, since a general purpose remote controller having no key dedicated to the display selection can be used, it is possible to reduce the cost of the system compared with a case where a remote controller having a dedicated key is prepared.

Further, in the screen adjustment, only the direction key 13 and the set key 15 of the keys of the remote controller 2 are used. Since the direction key 13 and the set key 15 can be made invalid in the usual state, the screen adjustment function does not influenced by operation of these keys.

Incidentally, although the screen adjustment such as brightness adjustment has been described mainly, the described embodiment can be applied to all screen adjustments such as the screen position adjustment and function settings.

As described in detail above, the multi-display apparatus 1 according to this embodiment of the present invention, which is constituted with the display devices 1a to 1d capable of being remotely controlled by the remote controller 2, includes the ID number memory 3 storing ID numbers for identifying the plurality of the display devices 1a to 1d, the detailed screen adjustment display unit 4 for simultaneously displaying the detailed screen adjustment information for designating the ID numbers on display screens of all of the display devices 1a to 1d, the screen adjustment menu display unit 5 for displaying the screen adjustment menu on the screen of only a specific one of the display devices, which corresponds to the ID number displayed on the detailed screen adjustment information, by the key operation of the remote controller 2, and the screen adjustment unit 6 for adjusting the display screen of the specific display device on the basis of the screen adjustment menu displayed on the specific display device. Therefore, it is possible, without using a remote controller having special narrow directivity or connecting a computer to the display devices to be adjusted, to easily select a display device to be adjusted and to adjust the display screen thereof in detail by using the remote controller, which may be a general purpose remote controller. Consequently, the operation for finely adjusting the display screens to make the whole screen of the multi-display apparatus uniform can be done easily and efficiently.

## Claims

1. A multi-display apparatus comprising:
a plurality of display devices which are remotely controllable by a remote controller;
an ID number storing unit which stores ID numbers for identifying the plurality of the display devices;
a detailed screen adjustment information display unit which simultaneously displays a detailed screen adjustment information for designating the ID number on display screens of the display devices according to an instruction from the remote controller;
a screen adjustment menu display unit which displays a screen adjustment menu on the display screen of the display device, which corresponds to the designated ID number, by a key operation of the remote controller; and
a screen adjustment unit being capable of adjusting the display screen of the display device on a basis of the screen adjustment menu.

2. A screen adjustment method of a multi-display apparatus for adjusting display screens of a plurality of display devices, which constitute the multi-display apparatus, by a remote controller, the method comprising the steps of:
storing ID numbers for identifying the plurality of the display devices in an ID number storing unit;
simultaneously displaying a detailed screen adjustment information on display screens of the display devices according to an instruction from the remote controller;
displaying a screen adjustment menu, by key operations of an ID input key and a screen adjustment key of the remote controller, the ID input key corresponding to the ID number displayed on the detailed screen adjustment information, on the display screen of the display device designated by the key operations; and
executing a screen adjustment in the displayed screen adjustment menu, which is designated by the remote controller.

3. The screen adjustment method as claimed in claim 2, wherein the detailed screen adjustment information on the display screens of other display devices than the display device corresponding to the ID number are returned to an initial screen display after a predetermined time.

4. The screen adjustment method as claimed in claim 2, wherein the displays on the display screens of the plurality of the display devices are returned to an initial screen display by a predetermined screen adjustment completion operation.

5. A screen adjustment program product for enabling a computer of a multi-display apparatus to execute adjustment of display screens of a plurality of display devices, which constitutes the multi-display apparatus, by a remote controller, the adjustment comprising the steps of:
storing ID numbers for identifying the plurality of the display devices in an ID number storing unit;
simultaneously displaying a detailed screen adjustment information on display screens of the display devices according to an instruction from the remote controller;
displaying a screen adjustment menu, by key operations of an ID input key and a screen adjustment key of the remote controller, the ID input key corresponding to the ID number displayed on the detailed screen adjustment information, on the display screen of the display device designated by the key operations; and
executing a screen adjustment in the displayed screen adjustment menu, which is designated by the remote controller.
